# EUROPÄISCHE PATENTANMELDUNG

(11) **EP 0 744 606 A2**
(43) Veröffentlichungstag der Anmeldung: **27.11.1996**
(21) Anmeldenummer: 96114140.5
(22) Anmeldetag: 04.09.1996
(51) Int. Cl.: G01M 3/32

(54) **Prüfkammer mit variablem Prüfraum**

(71) Anmelder: Lehmann, Martin, CH-5610 Wohlen 1 (CH)
(72) Erfinder: Lehmann, Martin, CH-5610 Wohlen 1 (CH)
(74) Vertreter: Troesch Scheidegger Werner AG

(57) **Zusammenfassung**

Der Kolben (4) einer Prüfkammer (1) für die Dichtheitsprüfung von Behältern (2) weist erfindungsgemäss einen Grundkörper (9) und einen dagegen verschiebbaren Anpresskolben (10) auf. Durch diese Anordnung wird der mit dem für den Druckaufbau zu beaufschlagende Raum (14) sehr klein und die Strecke des bewegten Teiles, dem Anpresskolben (10), ebenfalls sehr klein. Dies führt zu einem reduzierten Energiebedarf für die Druckerzeugung und zeigt ein verbessertes Verschleissverhalten der Kolbendichtungen (18,19).

## Beschreibung

Die vorliegende Erfindung betrifft eine Prüfkammer nach dem Oberbegriff von Anspruch 1 sowie eine mit derartigen Prüfkammern ausgerüstete Prüfvorrichtung.

Für die Prüfung der Dichtigkeit von Behältern werden diese in Prüfkammern eingebracht und unter Beaufschlagung von Druck oder durch Erzeugung von Vakuum getestet. Wenn diese zu prüfenden Behältnisse nicht geschlossen sind, sondern offen sind wie beispielsweise Kübel oder unverschlossene Flaschen o.ä., müssen diese Öffnungen in der Prüfkammer in geeigneter Form temporär verschlossen werden. Dies kann beispielsweise direkt über den Deckel resp. das Verschlussteil der Prüfkammer erfolgen. Dabei muss beispielsweise der Behälter unter Aufbringung eines entsprechend dem angewandten Prüfverfahren hohen Anpressdruckes über eine geeignete Dichtung gegen diesen Deckel gepresst werden. Dieser Anpressdruck ist insbesondere auch von der Grösse des Behälters abhängig und kann sehr gross sein.

Herkömmlicherweise wird dieser Anpressdruck über einen in der Prüfkammer verschiebbaren Kolben erzeugt. Dabei wird der Kolben bis zum Anschlag an die Oberseite des zu prüfenden Behälters gebracht und danach mit dem notwendigen Druck beaufschlagt. Diese Bewegung und der Druck wird herkömmlicherweise hydraulisch oder pneumatisch über entsprechende Druckerzeugungsvorrichtungen und damit verbundene Druckleitungen erzeugt. Wenn das Prüfkammervolumen derart bemessen ist, um unterschiedlich grosse Behälter aufnehmen zu können, so kann der Hub des Kolbens sehr gross sein. Dies bedeutet aber auch einen entsprechend grossen Volumenbedarf an Druckerzeugungsmitteln, wie beispielsweise Pressluft oder Hydrauliköl. Insgesamt ist der Energiebedarf dabei sehr hoch, da während der jeweiligen Prüfzeit der Druck auf den Behälter aufrechterhalten werden muss. Herkömmlicherweise wird der Kolben nach jedem einzelnen Prüfvorgang wieder in seine Ausgangsstellung verfahren, d.h. in seine Endstellung am der Zuführungsöffnung entfernten Prüfkammerende. Bei kleinen zu prüfenden Behältern führt dies für jeden einzelnen Prüfvorgang zu hohen Zustellzeiten und führt auch zu einem grossen Verschleiss an den Dichtungen des Kolbens, was zu kleinen Standzeiten dieses Kolbens führt.

Die Aufgabe der vorliegenden Erfindung bestand darin, die obengenannten Probleme zu beheben und eine einfache und zuverlässige Möglichkeit zum Aufbringen des Druckes auf unterschiedlich grosse zu prüfende Behälter bereitzustellen.

Diese Aufgabe wird erfindungsgemäss durch das Kennzeichen von Anspruch 1 gelöst. Weitere erfindungsgemäss bevorzugte Ausführungsformen der Erfindung ergeben sich aus den Ansprüche 2 bis 4. Die Verwendung eines zweiteiligen Anpresskolbens bringt insbesondere den Vorteil mit sich, dass der das Prüfvolumen bestimmende Grundkörper jeweils an die Grösse des zu prüfenden Behälters angepasst an eine bestimmte Position verfahren werden kann. Vorzugsweise erfolgt dies mechanisch, was mit verhältnismässig kleiner Energieaufwendung erfolgen kann. Wenn mehrere gleiche Behälter nacheinander geprüft werden sollen, was die Regel ist, so kann diese Grundeinstellung beibehalten werden. Für die Beaufschlagung des Anpressdruckes auf die Oberseite des Behälters wird anschliessend der Druck vorzugsweise hydraulisch oder pneumatisch zwischen dem Grundkörper und dem Anpresskolben mittels eines geeigneten Mediums eingebracht. Das Volumen dabei ist sehr klein, da der Anpresskolben, welcher praktisch bereits an der Oberseite des zu prüfenden Behälters aufliegt, nur noch einen sehr kleinen Hub ausführen muss. Damit wird das notwendige Volumen für das Druckmedium, beispielsweise Pressluft oder Hydrauliköl, ebenfalls sehr klein. Damit kann dieser Druck durch einfachere, kleinere und weniger Energie konsumierende Vorrichtungen erzeugt werden als bei den herkömmlichen bekannten Prüfkammern. Weiter wird auch der Verschleiss der Dichtungen am Kolben und am Grundkörper reduziert, da diese nur noch über sehr kleine Wege bewegt werden müssen. Insbesondere wird der Grundkörper nur noch sehr wenig bewegt.

Weiter wird erfindungsgemäss das Verfahren nach Anspruch 5 vorgeschlagen. Weitere erfindungsgemässe bevorzugte Verfahrensschritte ergeben sich aus den Ansprüchen 6 bis 7.

Weiter eignen sich erfindungsgemässe Prüfkammern erfindungsgemäss für die Verwendung in Prüfvorrichtungen nach Anspruch 8.

Ein Ausführungsbeispiel der Erfindung wird nachstehend anhand von Zeichnungen noch näher erläutert. Es zeigen
Fig. 1 schematisch den Längsschnitt durch eine herkömmliche Prüfkammer:
Fig. 2 schematisch den Längsschnitt durch den erfindungsgemässen Grundkörper und Anpresskolben;
Fig. 3 schematisch eine Karusell-Prüfanlage mit Prüfkammern.

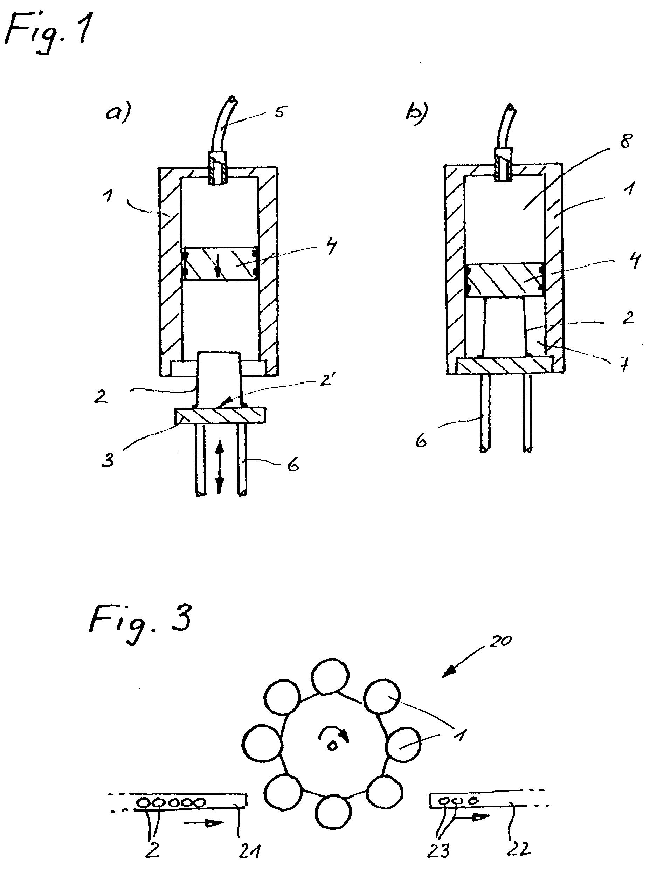

In Figur 1 a) ist schematisch der Längsschnitt durch eine herkömmliche Prüfkammer 1 für die Dichtheitsprüfung von Behältern 2 dargestellt, und zwar in geöffneten Zustand. Der Behälter 2 ist hier beispielsweise ein offener Kübel. Er wird mit der Öffnung 2' nach unten auf den Deckel 3 der Prüfkammer 1 gestellt. Dies kann entweder manuell oder vorzugsweise automatisch mittels bekannten Zuführungsvorrichtungen wie Förderbänder erfolgen. Der Deckel 3 weist vorzugsweise im Auflagebereich des Randes des Behälters 2 Dichtungsmittel, wie Dichtungsringe, auf.

Um nun den Behälter 2 in die Prüfkammer 2 einzuführen, besitzt der Deckel 3 beispielsweise ein Schliessgestänge 6, welches hydraulisch, pneumatisch oder mechanisch betätigt werden kann. Der Behälter 2 wird nun durch Verfahren des Deckels 3 in die Zuführungsöffnung 1' der Prüfkammer 1 in das Innere der Prüfkammer 1 gebracht. Um einen Haltedruck auf den Boden 2'' dem Behälters 2 zu erzeugen, ist beispielsweise ein in der Prüfkammer 1 längsverfahrbarer Kolben 4 vorhanden. Dieser Kolben 4 wird herkömmlicherweise hydraulisch oder pneumatisch betätigt. Im in der Figur 1 dargestellten Beispiel ist er pneumatisch über eine Speiseleitung 5 betätigbar.

In Figur 1b) ist die Prüfkammer 1 nun in prüfbereitem Zustand dargestellt. Der Deckel 3 wird durch das Schiebegestänge 6 in der dargestellten geschlossenen Position gehalten. Der Behälter 2 ist zwischen dem Deckel 3 und dem Kolben 4 eingeklemmt. Nun kann der eigentliche Prüfvorgang einsetzen. Dabei können die bekannten Dichteprüfverfahren eingesetzt werden, wie beispielsweise die Prüfung mittels Über- oder Unterdruck. Dabei wird ein Druckunterschied zwischen dem abgedichteten Innenraum des Behälters 2 und dem Prüfkammerraum 7 gebildet und mittels herkömmlichen Druckmessverfahren geprüft, ob der Behälter 2 eine undichte Stelle aufweist oder nicht.

Es ist klar, dass hierfür eine entsprechend diesen Prüfdrücken bemessene Kraft für das Andrücken des Behälters 2 an den Deckel 3 aufgebracht werden muss, resp. diese Kraft auch über den Kolben 4 aufgebracht werden muss. Im übrigen muss dieser Schliessdruck während des ganzen Messvorganges aufrechterhalten werden, damit überhaupt brauchbare Messresultate erhalten werden können.

Einerseits bedeutet dies einen erheblichen Energieaufwand für das Betreiben der Prüfkammer selbst, andererseits besteht bei einer unregelmässigen oder gar unzuverlässigen Aufbringung dieser Schliesskraft die Gefahr, dass die Messung verfälscht oder gar verunmöglicht wird. Insbesondere tritt dieses Problem dann auf, wenn beispielsweise in einer kontinuierlichen Prüfanlage für die Prüfung von grossen Behältermengen möglichst kurze Prüfzeiten bei hoher Genauigkeit erreicht werden sollen. Unter hoher Genauigkeit wird dabei das Erkennen von sehr kleinen Undichtigkeiten, d.h. kleinen Löchern, verstanden. Dabei muss jeweils das gesamte freie Volumen 8 über dem eigentlichen Prüfvolumen 7 jeweils neu mit dem unter hohen Druck stehenden Druckmedium aufgefüllt werden.

Vielfach sind derartige Anlagen als sogenannte Karusellanlagen ausgeführt, d.h. eine Anzahl von einzelnen Prüfkammern sind auf einer umlaufenden Kreisbahn angeordnet und werden jeweils am Anfang des Umlaufes mit einem Prüfbehälter 2 beschickt und führen diesen gegen Ende eines Umlaufes wieder weg, wie schematisch in Figur 3 dargestellt.

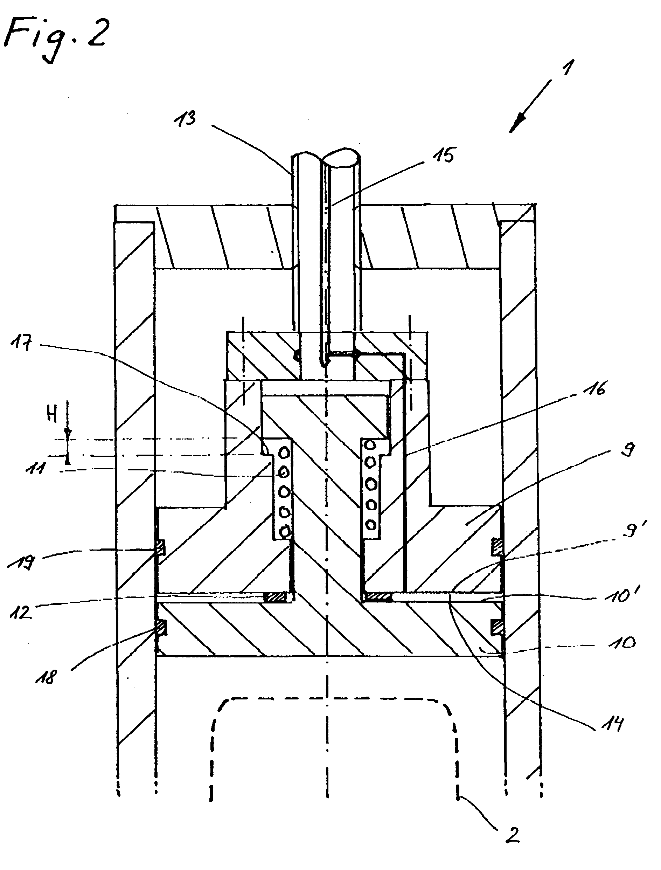

Diese Probleme werden nun erfindungsgemäss beispielsweise durch die in Figur 2 im Längsschnitt dargestellte Konstruktion vermieden.

Der Kolben ist nun zweiteilig aus einem Grundkörper 9 und einem Anpresskolben 10 aufgebaut. Der Anpresskolben 10 ist dabei achsial beweglich im Grundkörper 9 angeordnet und wird vorzugsweise über eine Federelement 11 in seine in dieser Figur dargestellten Ruheposition gezogen. In dieser Position liegt die Oberseite 10' des Anpresskolbens 10 über einen dämpfenden Anschlagring 12 an der Unterseite 9' des Grundkörpers 9 an.

Dieser erfindungsgemässe Kolben wird nun beispielsweise mittels einer Gewindestange 13, welche durch den oberen Gehäuseabschnitt der Prüfkammer 1 führt, in eine Position gerade über dem zu prüfenden Behälter 2 positioniert. Die Gewindestange kann beispielsweise mittels eines elektrischen Stellmotores (nicht dargestellt) betätigt werden.

Durch das Zuführen eines Druckmediums, beispielsweise Pressluft oder Hydrauliköl, in den Zwischenraum 14 zwischen dem Grundkorper 9 und dem Anpresskolben 10 wird letzterer gegen die Oberseite des Behälters 2 verschoben. Das Druckmedium wird hier beispielsweise über den in der Gewindestange 13 angeordneten Kanal 15 und den im Grundkörper angeordneten Kanal 16 in den Zwischenraum 14 zugeführt. Der maximal ausführbare Hub H ist durch den Anschlag 17 am Grundkörper beschränkt. Durch entsprechend nahe Positionierung des Grundkörpers 9 am Behälter 2 wird auch nur ein sehr kleiner Hub H des Anpresskolbens 10 benötigt.

Wie aus dieser Figur leicht ersichtlich ist, wird durch diese erfindungsgemässe Konstruktion das für die Aufbringung des Druckes notwendige Volumen, im Zwischenraum 14, im Vergleich zum herkömmlich benötigten Volumen 8 aus Figur 1 drastisch verringert.

Sobald der Druck in diesem Zwischenraum 14 reduziert wird, druckt das Federelement 11 den Anpresskolben 10 wieder in seine Ruheposition zurück. Dabei legen die Kolbendichtungen 18 des Anpresskolbens 10 auch nur geringe Wege zurück, was zu einem sehr günstigen Verschleissverhalten führt, d.h. es werden lange Standzeiten erreicht. Auch die Kolbendichtungen 19 des Grundkörpers 9 werden nur wenig beansprucht, da der Grundkörper 9 jeweils nur dann verstellt wird, wenn die Grösse des zu prüfenden Behälters 2 wechselt. Häufig werden jedoch sehr grosse Serien von identischen Behältern 2 in einem kontinuierlichen Arbeitsgang geprüft.

In Figur 3 ist schliesslich noch schematisch die Aufsicht auf eine Karusell-Dichtigkeitsprüfanlage 20 dargestellt. Hierbei sind eine Anzahl von Prüfkammern 1 entlang einer Kreisbahn angeordnet. Diese Anordnung wird nun um ihre Hochachse rotiert. Beispielsweise werden von der einen Seite die zu prüfenden Behälter 2 über ein Förderband 21 der Karusell-Anlage zugeführt und die fertig geprüften Behälter 23 mittels einem weiteren Förderband 22 weggeführt. Die Zu- und Abführung der Behälter 2 und 23 auf resp. vom Deckel 3 kann mittels herkömmlichen bekannten automatischen Vorrichtungen oder manuell erfolgen.

## Patentansprüche

1. Prüfkammer (1) für die Prüfung von offenen Hohlräumen aufweisenden Behältern (2), mit einem eine Zufuhröffnung für die Behälter (2) abdeckbaren Deckel (3), welcher gleichzeitig als Träger und für den Behälter (2) ausgebildet ist und einen in der Prüfkammer längsverschiebbaren Kolben (4), welcher an die Oberseite des Behälters (2) in Anschlag bringbar ist, dadurch gekennzeichnet, dass der Kolben (4) einen gegenüber der Prüfkammer (1) einstellbar verschiebbaren Grundkörper (9) aufweist und einen Anpresskolben (10), welcher gegenüber dem Grundkörper (9) verschiebbar mit der Behälteroberseite in Anschlag bringbar ist.

2. Prüfkammer nach Anspruch 1, dadurch gekennzeichnet, dass der Grundkörper (9) mechanisch mittels einer Spindel (13) bewegbar ist.

3. Prüfkammer nach Anspruch 1 oder 2, dadurch gekennzeichnet, dass der Anpresskolben (10) hydraulisch oder pneumatisch mit Druck beaufschlagbar ist.

4. Prüfkammer nach Anspruch 1 bis 3, dadurch gekennzeichnet, dass der Anpresskolben (10) zwischen zwei bezüglich dem Grundkörper (9) definierten Anschlagen (12,17) gegen ein Federelement (11) beweglich angeordnet ist.

5. Verfahren zum Betreiben einer Prüfkammer (1) nach einem der Ansprüche 1 bis 4, dadurch gekennzeichnet, dass
- entsprechend der Grösse des zu prüfenden Behälters (2) der Grundkörper (9) auf eine Position in der Prüfkammer (1) gebracht wird oder belassen wird, in welcher der Anpresskolben (10) an die Oberseite des Behälters (2) in Anschlag gelangt,
- danach der Deckel (3) mit dem Behälter (2) in die Zuführöffnung eingesetzt wird,
- danach der zwischen Grundkörper (9) und Anpresskolben (10) gebildete Raum (14) mit Druck beaufschlagt wird und des Prüfvorgang eingeleitet wird,
- und nach Abschluss des Prüfvorgangs der Druck wieder gelöst wird und
- der Deckel (3) aus der Zuführöffnung herausgezogen wird.

6. Verfahren nach Anspruch 5, dadurch gekennzeichnet, dass der Grundkörper (9) mittels einer mit einem Stellmotor angetriebenen Spindel (13) bewegt wird.

7. Verfahren nach Anspruch 5 oder 6, dadurch gekennzeichnet, dass des Druck auf den Anpresskolben (10) hydraulisch oder pneumatisch aufgebracht wird.

8. Prüfvorrichtung mit auf einer umlaufenden Bahn drehbar angeordneten Prüfkammern (1) nach einem der Ansprüche 1 bis 4.
